# EUROPÄISCHE PATENTSCHRIFT

(11) **EP 0 290 477 B1**
(45) Veröffentlichungstag und Bekanntmachung des Hinweises auf die Patenterteilung: **10.05.1995**
(21) Anmeldenummer: 87904852.8
(22) Anmeldetag: 12.08.1987
(51) Int. Cl.: B64D 11/06

(54) **SITZEINHEIT UND DEREN ANORDNUNG FÜR EINEN BEGLEITER IN EINEM FAHRZEUG, INSBESONDERE IN EINEM LUFTFAHRZEUG**
SEATING UNIT AND ITS INSTALLATION FOR CREW MEMBERS OF A VEHICLE, ESPECIALLY AN AIRCRAFT
UNITE DE SIEGE ET SON IMPLANTATION POUR MEMBRES DE L'EQUIPAGE D'UN VEHICLE, EN PARTICULIER D'UN AVION

(30) Priorität: 29.08.1986 DE 3629505
(43) Veröffentlichungstag der Anmeldung: 17.11.1988
(73) Patentinhaber: Daimler-Benz Aerospace Airbus Gesellschaft mit beschränkter Haftung, 21129 Hamburg (DE)
(72) Erfinder: BAYMAK, Faruk, D-2000 Hamburg 52 (DE); STÜBEN, Helmut, D-2162 Grünendeich (DE)
(74) Vertreter: Hansmann, Dierk, Dipl.-Ing.
(86) Internationale Anmeldenummer: DE8700351
(87) Internationale Veröffentlichungsnummer: WO8801589

(56) Entgegenhaltungen:
- EP-A- 0 170 116
- WO-A-87/01355
- GB-A- 2 102 656
- US-A- 4 460 215

## Beschreibung

Die Erfindung bezieht sich auf eine Sitzeinheit und deren Anordnung für einen Begleiter in einem Fahrzeug, insbesondere in einem Luftfahrzeug, wie im Oberbegriff des Anspruchs 1 näher angegeben.

Die Begleitersitze in einem Fahrzeug sollen einerseits derart beschaffen und angeordnet sein, daß sich das Begleitpersonal nach Erfordernis bei Benutzung des Sitzes eine Übersicht über den Fahrgastraum und die Passagiere verschaffen kann und andererseits bei Nichtbenutzung dieser Sitze die Durchgänge in Ein- und Ausgangsbereichen der Fahrzeuge durch den Platzbedarf der Sitze nicht versperrt werden, damit Passagiere und Besatzung das Fahrzeug auch bei Gefahr möglichst ungehindert und schnell verlassen können.

Bekannte Sitzeinheiten dieser Art sind in der Regel derart ausgebildet, daß ein Sitzteil mit einem Traggerüst starr verbunden ist, und nur Sitzflächen und Klappen schwenkbar angeordnet sind. Der Einbau dieser Sitzeinheiten z.B. in ein Flugzeug erfolgt in der Regel mittels Schraubverbindungen auf dem Fußbodengerüst, oder an einer Kabinenwand. Bei dieser Anordnung ist die Sitzeinheit an sich starr und unbeweglich bzw. fest positioniert. Sitze dieser Art können von ihrem Einbauort nicht mehr fortbewegt werden. Hierdurch tritt sehr oft der Fall ein, daß ein Sitz für einen Flugbegleiter an einem für die Betreuung der Passagiere optimalen Ort nicht montiert werden darf, weil er gerade hier im Notfall einen wichtigen Fluchtweg einengen würde.

Aus der EP 0 170 116 A1 ist eine Klappsitz-Baugruppe bekannt mit einer aufrechten Rückenlehne und einer daran angelenkten Sitzfläche, wobei die Sitzfläche infolge einer Feder automatisch aus einer waagerechten Gebrauchsposition in eine senkrechte Stauposition einschwenken kann. Die Rückenlehne dieser Baugruppe ist gelenkig um eine vertikale Achse mit einem wandseitigen Beschlag verbunden, wobei eine zweite Feder vorgesehen sein kann, so daß wenn sich die Sitzfläche in ihrer Stauposition befindet, der Sitz in eine flache an der Wand anliegende Stauposition eingeschwenkt werden kann.

Der Nachteil dieses schwenkbaren Flugbegleitersitzes besteht darin, daß dieser nur an einer Wand montierbar ist. Hierdurch kann sicherlich ein hinreichend breiter Fluchtweg geschaffen werden, wobei die Sichtverhältnisse für den Flugbegleiter im Einzelfall jedoch nicht immer optimal sind.

In der Regel sind die Flugbegleitersitze daher nicht an den für eine ausreichende Überwachung günstigen Stellen eingebaut, so daß zusätzliche Flugbegleitersitze einzubauen sind, um eine ausreichende Überwachung zu gewährleisten.

Demgemäß liegt der Erfindung die Aufgabe zugrunde, eine Sitzeinheit derart auszubilden, daß das Sitzteil aus einer Parkposition heraus in eine Benutzerposition bewegt werden kann, aus der es nach Gebrauch wieder manuell oder automatisch zurückgeführt wird, ohne dabei auf Komfort- und Sicherheitsmerkmale wesentlich zu verzichten, daß es kostengünstig herzustellen ist und in der Aufstellung an verschiedenen Einbauorten in einem Luftfahrzeug, insbesondere in Gang und Ausstiegsbereichen, Anwendung finden kann.

Diese Aufgabe wird bei einer gattungsgemäßen Sitzeinheit dadurch gelöst, daß die tragende Struktur aus einem kastenförmigen Traggerüst gebildet ist und mit dem Sitzteil eine Einheit bildet, die im Fahrzeug wahlweise an verschiedenen Einbauorten auf dem Fußboden aufstellbar ist und das Sitzteil und das Traggerüst über Führungen horizontal gegeneinander verschiebbar beweglich sind. Vorteilhafte Weiterbildungen der Erfindung sind in den Unteransprüchen angegeben.

Der Hauptvorteil der Erfindung besteht darin, daß die Sitzeinheit mit ihrem beweglichen Sitzteil unabhängig von festen Wänden, Mulden, Strukturspanten und Scharnierbeschlägen ist und überall dort aufgestellt werden kann, wo ein optimaler Einblick auf die Passagierkabine z.B. in der Nähe von Kabinentüren, Durchgängen zu Notausstiegen usw. vorhanden ist, und daß das Sitzteil nach Benutzung aus einem sicherheitsrelevanten Gang- oder Ausstiegsbereich fortbewegt werden kann. Die Sitzeinheit kann auch an Orten mit wenig Stellplatz untergebracht werden, wodurch die Installation zusätzlicher Passagiersitze ermöglicht wird. Obwohl in der Zeichnung Lösungen dargestellt sind, wobei das Sitzteil auf verschiedene Weise beweglich ist, erstreckt sich der Schutz nur auf Ausgestaltungen mit horizontal verschiebbarem Sitzteil.

Die Erfindung ist anhand der Zeichnung dargestellt und in der Beispielbeschreibung näher erläutert. Es zeigen
- Fig. 1: eine Ansicht einer Sitzeinheit,
- Fig. 2: ein gedrehtes Sitzteil der Sitzeinheit nach Fig. 1,
- Fig. 3: eine Sitzeinheit mit gedrehtem Sitzteil,
- Fig. 4: eine Ansicht einer Sitzeinheit mit einem festen Begleitersitz in Parallelanordnung,
- Fig. 5: die Draufsicht nach Fig. 4,
- Fig. 6: eine Seitenansicht einer Sitzeinheit mit einem festen Begleitersitz in Reihenanordnung,
- Fig. 7: die Ansicht B der Sitzeinheit nach Fig. 6 und
- Fig. 8: eine Draufsicht eines Durchgangsbereiches mit einer Sitzanordnung.

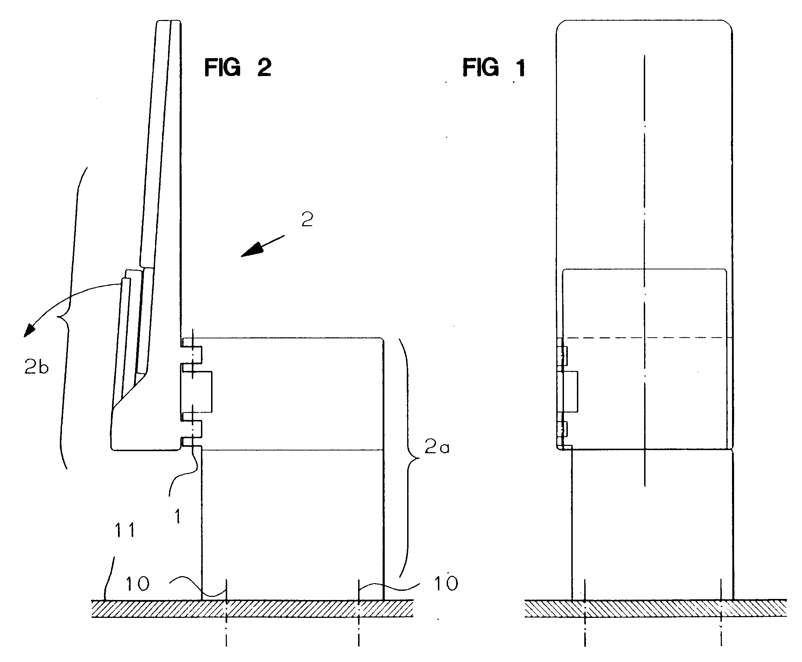

Die in den Figuren 1 bis 5 und 8 gezeigte Sitzeinheiten sind nicht Ausführungsbeispiele der Erfindung.

Die Fign. 1 und 2 zeigen eine Sitzeinheit 2, im wesentlichen bestehend aus einem um die Achse 1 beweglich gelagerten Sitzteil 2b und einem Traggerüst 2a. Die Sitzeinheit 2 wird mittels Schraubverbindungen 10 an einem Fußboden 11 befestigt.

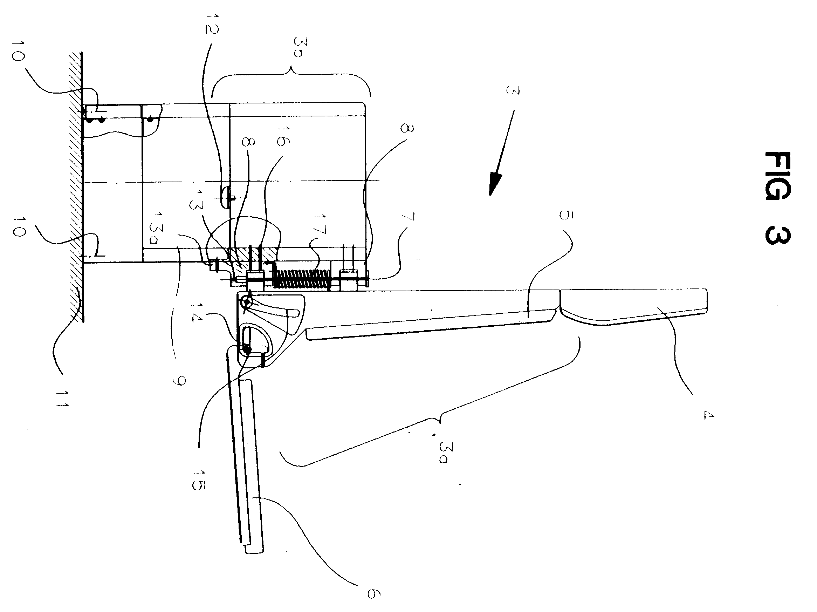

Fig. 3 zeigt schematisch eine Sitzeinheit 3, welche auf einem Fußboden 11 mit Schraubverbindungen 10 befestigt ist. Diese Sitzeinheit wird durch ein Sitzteil 3a und ein Traggerüst 3b gebildet. Das Sitzteil 3a besteht aus einer Sitzfläche mit Polster 6, welches um eine Achse 14 klappbar gelagert ist, einer Rückenlehne mit Polster 5, einer Kopfstütze mit Polster 4. Das Sitzteil 3a ist mit Hilfe eines Hebels 15 und eines Verriegelungsschnäppers 13 im Beschlagteil 13a in einer Benutzerposition arretiert dargestellt. Das Sitzteil 3a ist mit Hilfe von Scharnierbeschlägen 8 um die Achse 7 beweglich. Die Beschläge 8 sind durch Schrauben 16 an einem Seitenteil 9 des Traggerüstes befestigt. Das Sitzteil 3a wird bei Nichtgebrauch mit Hilfe einer Rückhaltefeder 17 nach dem Entriegeln (Hebel 15) um die Achse 7 in eine Parkposition, wie in Fig. 1 gezeigt, gebracht und mit Hilfe einer Einrichtung verriegelt, die im wesentlichen aus einem Hebel 15, einem Schnäpper 13 und einer Verriegelungsbohrung 12 besteht.

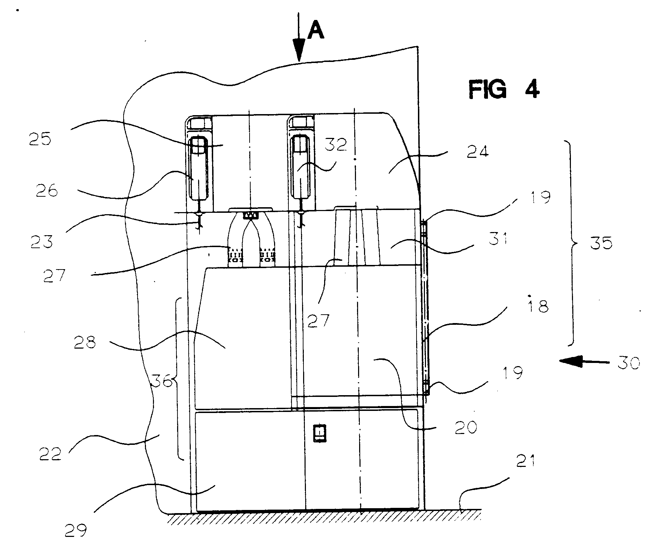

Fig. 4 zeigt eine Ansicht einer Sitzeinheit 30 mit einem festen Begleitersitz, welcher zugleich auch das Traggerüst 36 bildet und mit einem Sitzteil 35 in Parallelanordnung dargestellt ist. Das Sitzteil 35 besteht aus einer Kopfstütze 24 mit einer Kommunikationseinheit 32, einer Rückenlehne mit Polster 31, einer zugeklappt dargestellten Sitzfläche mit Polster 20, einem Sicherheitsgurtsystem 27 und kann mit Hilfe der Scharnierbeschläge 19 um die Achse 18 bewegt werden. Ein weiterer parallel zum Sitzteil 35 angeordneter Sitz ist in das Traggerüst 36 integriert und besteht im wesentlichen aus einer aufklappbaren Sitzfläche 28, einer Rückenlehne mit Polster 23, einer Kopfstütze 25 mit einer weiteren Kommunikationseinheit 26 sowie einem Sicherheitsgurtsystem 27. Im unteren Traggestellbereich befindet sich ein durch eine Klappe 29 gesicherter Stauraum. Die Sitzeinheit kann sowohl durch auf einem Fußboden 21 als auch an einer Wand 22 befestigt sein.

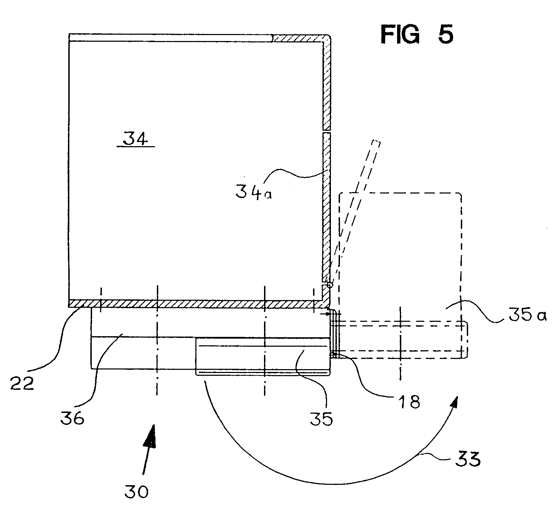

Fig. 5 zeigt die Draufsicht A nach Fig. 4 auf eine Sitzeinheit 30, welche an einer Wand 22 eines abgetrennten Raumes 34 befestigt ist, wobei der Raum 34 durch eine Tür 34a zugänglich ist. Die Pfeilrichtung 33 zeigt die Bewegungsrichtung des Sitzteiles 35 zum Traggerüst 36 um die Achse 18 an, wobei das Sitzteil in der Ausgangsposition und/oder in der gestrichelt dargestellten Position 35a benutzbar ist.

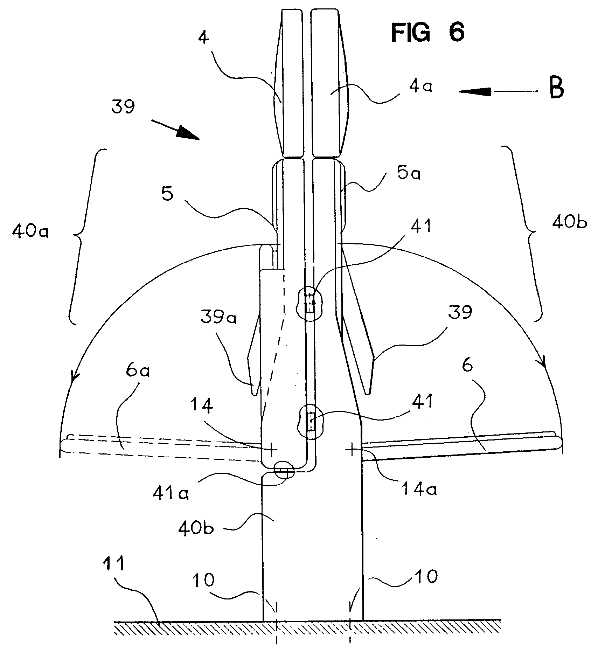

Fig. 6 zeigt schematisch eine Seitenansicht einer Sitzeinheit 39, bestehend aus einem Sitzteil 40a, welches mit Hilfe von Führungselementen 41,41a zum Traggerüst 40b beweglich (verschiebbar) angeordnet ist. In das Traggerüst 40b ist ein weiterer Sitz integriert, der aus einer Kopfstütze mit Polster 4a, der oberen Rückenlehne mit Polster 5a und einer Sitzfläche mit Polster 6 gebildet wird, wobei bei Benutzung der Sitzfläche 6 die Rückenlehne mit dem Polster 39 in Pfeilrichtung um die Achse 14a beispielsweise einen Neigungswinkel zur Vertikalen bildet, welcher dem sog. Äkerblomknick nachgebildet ist. Unter dem Äkerblomknick versteht man eine spezielle Ausbildung einer Rückenlehne, wodurch die Wirbelsäule einer Person im Lendenbereich in vorteilhafter Weise abgestützt wird. Ein zum Traggerüst 40b verschiebbares Sitzteil 40a wird aus einer Kopfstütze mit Polster 4, aus einem Rückenlehnenoberteil mit Polster 5, aus einer Sitzfläche mit Polster 6a und einer unteren Rückenlehne mit Polster 39a gebildet. Auch hier kann die Rückenlehne 39a beim Betätigen der Sitzfläche 6a in Pfeilrichtung um die Achse 14 einen für die Benutzerperson ergonomisch günstigen Winkel, beispielsweise einen Äkerblomknick bilden.

Die Sitzeinheit 39 ist auf einem Fußboden 11 durch Schraubverbindungen 10 befestigt. Die Sicherheitsgurtsysteme der Sitzeinheit werden hier nicht gezeigt.

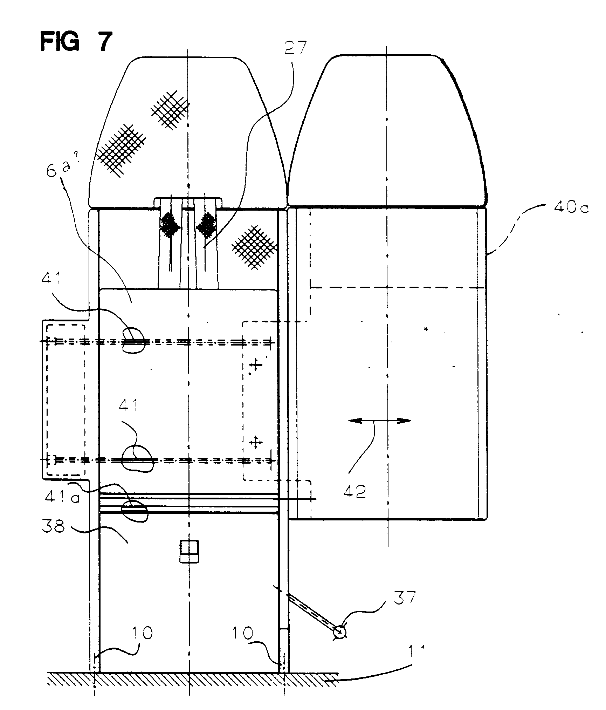

Fig. 7 zeigt die Ansicht B der Sitzeinheit nach Fig. 6, wobei das Sitzteil 40a mit Hilfe der Führungen 41,41a in Richtung des Pfeiles 42 mit Hilfe eines Hebels 37 entweder verschiebbar oder selbsttätig nach Verlassen einer Sitzfläche durch eine Benutzerperson in eine Parkposition gebracht werden kann. Das Traggerüst mit integriertem Sitz besteht weiterhin aus einem hier nicht gezeigten Stauraum, welcher durch eine Stauklappe 38 zugänglich ist
Außerdem kann das Sitzteil (35) der Sitzeinheit gemäß den Figuren 6 und 7 mit einer Kommunikationseinheit ausgestattet werden, und es kann in vorwählbaren Positionen zum Traggerüst ver- und entriegelbar ausgebildet werden.

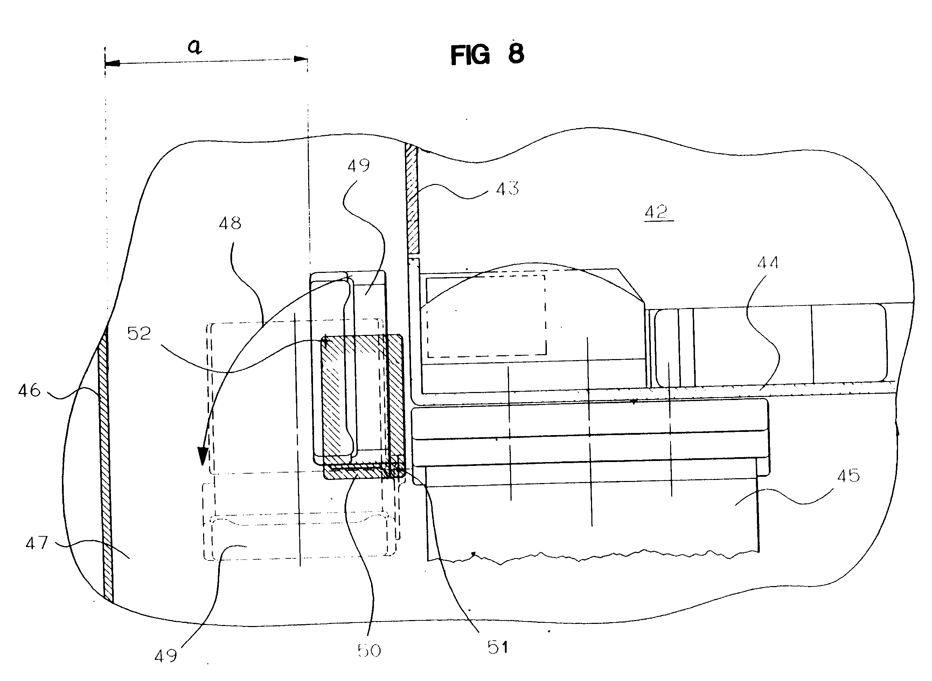

Fig. 8 zeigt beispielhaft eine Draufsicht auf einen Gangbereich 47, der gebildet wird durch eine Wand 46 sowie die Wände 43 und 44 des Raumes 42. An der Wand 44 ist eine Draufsicht einer Doppelsitzanordnung 45 dargestellt. Entsprechend der Fig. 3 ist ein Traggestell 50 mit Sitzteil 49, welche in Pfeilrichtung 48 um den Punkt 51 in Position 49a gedreht dargestellt. Die Ver- und Entriegelung des Sitzteiles 49 wird mit der hier nicht näher gezeigten Einrichtung 52 ermöglicht. Die Durchgangsbreite a entsteht, wenn eine Benutzerperson das Sitzteil 49 in eine Parkposition bringt.

## Patentansprüche

1. Sitzeinheit für einen Begleiter in einem Fahrzeug, insbesondere in einem Luftfahrzeug, mit einer Sitzfläche, einer Rückenlehne und einer die Sitzfläche und die Rückenlehne tragenden Struktur, wobei Sitzfläche und Rückenlehne zueinander klappbar angeordnet sind und das aus Sitzfläche und Rückenlehne gebildete Sitzteil gegenüber der tragenden Struktur beweglich angeordnet ist, wobei das Sitzteil aus einer Parkposition in eine Benutzerposition bewegt werden kann,
dadurch **gekennzeichnet,** daß die tragende Struktur aus einem kastenförmigen Traggerüst (2a,3b,36,40b,50) gebildet ist und mit dem Sitzteil (2b, 3a,35,40a,49) eine Einheit bildet, die im Fahrzeug wahlweise an verschiedenen Einbauorten auf dem Fußboden (11,21) aufstellbar ist und das Sitzteil (40a) und das Traggerüst (40b) über Führungen (41, 41a) horizontal gegeneinander verschiebbar beweglich sind.

2. Sitzeinheit nach Anspruch 1,
dadurch **gekennzeichnet,** daß die Rückenlehne (39a) beweglich angeordnet ist und dadurch einen Äkerblomknick bildet.

3. Sitzeinheit nach Anspruch 1 oder 2,
dadurch **gekennzeichnet,** daß das Sitzteil (35) mit einer Kommunikationseinheit (26,32) ausgestattet ist.

4. Sitzeinheit nach einem der Ansprüche 1 bis 3,
dadurch **gekennzeichnet,** daß das Sitzteil in vorwählbaren Positionen zum Traggerüst ver- und entriegelbar ist.

5. Sitzeinheit nach einem der Ansprüche 1 bis 4,
dadurch **gekennzeichnet,** daß sich das Sitzteil nach dem Aufstehen einer Benutzerperson von der Sitzfläche selbsttätig in eine Parkposition zurückbewegt.

6. Sitzeinheit nach einem der Ansprüche 1 bis 5,
dadurch **gekennzeichnet,** daß das Traggerüst der Sitzeinheit mit dem Fahrzeugboden (11) befestigt ist.

## Claims

1. Seat unit for an attendant in a vehicle, in particular in an aircraft, having a seat, a back-rest and a structure supporting the seat and back-rest, the seat and back-rest being arranged so as to be capable of folding up relative to one another and the seat part formed by the seat and back-rest being disposed so as to be movable relative to the supporting structure, the seat part being movable out of a parked position into a user position, characterized in that the supporting structure is formed by a box-shaped supporting framework (2a, 3b, 36, 40b, 50) and together with the seat part (2b, 3a, 35, 40a, 49) forms a unit, which may be installed in the vehicle selectively at various locations on the floor (11, 21), and the seat part (40a) and the supporting framework (40b) are horizontally displaceable relative to one another by means of guides (41, 41a).

2. Seat unit according to claim 1,
characterized in that the back-rest (39a) is movably disposed and as a result forms an Äkerblom bend.

3. Seat unit according to claim 1 or 2,
characterized in that the seat part (35) is equipped with a communication unit (26, 32).

4. Seat unit according to one of claims 1 to 3,
characterized in that the seat part may be locked into and released from preselectable positions relative to the supporting framework.

5. Seat unit according to one of claims 1 to 4,
characterized in that the seat part returns automatically into a parked position after the seat has been vacated by the user.

6. Seat unit according to one of claims 1 to 5,
characterized in that the supporting framework of the seat unit is fastened to the vehicle floor (11).

## Revendications

1. Siège pour un accompagnateur, dans un véhicule, notamment un aéronef, comportant une assise, un dossier et une structure portant l'assise et le dossier, l'assise et le dossier pouvant être rabattus l'un par rapport à l'autre et en ce que la partie de siège formée par l'assise et le dossier est mobile par rapport à la structure de support, la partie de siège pouvant être déplacée d'une position de rangement à une position d'utilisation, élément caractérisé en ce que la structure de support se compose d'une ossature en forme de caisson (2a, 3b, 36, 40b, 50) et forme un ensemble avec la partie de siège (2b, 3a, 35, 40a, 49) qui peut être montée dans le véhicule, au choix, en différents emplacements de fixation sur le plancher (11, 21) et en ce que la partie de siège (40a) et l'ossature (40b) sont mobiles en coulissement l'une par rapport à l'autre, horizontalement par l'intermédiaire de moyens de guidage (41, 41a).

2. Siège selon la revendication 1, caractérisé en ce que le dossier (39a) est mobile et forme ainsi un appui pour le bas du dos.

3. Siège selon la revendication 1 ou 2, caractérisé en ce que la partie de siège (35) est équipée d'une unité de communication (26, 32).

4. Siège selon l'une des revendications 1 à 3, caractérisé en ce que la partie de siège peut se verrouiller et se déverrouiller dans des positions présélectionnées par rapport à l'ossature.

5. Siège selon l'une des revendications 1 à 4, caractérisé en ce que la partie de siège se replie automatiquement en position de rangement lorsque l'utilisateur se soulève de l'assise.

6. Siège selon l'une des revendications 1 à 5, caractérisé en ce que son ossature est fixée au plancher (11) du véhicule.
